# EUROPÄISCHE PATENTANMELDUNG

(11) **EP 4 098 599 A1**
(43) Veröffentlichungstag der Anmeldung: **07.12.2022**
(21) Anmeldenummer: 22176223.0
(22) Anmeldetag: 30.05.2022
(51) Int. Cl.: B66F 9/075, B60G 17/005

(54) **FAHRWERKZYLINDER FÜR EIN FLURFÖRDERZEUG MIT EINEM GEGENÜBER DEM BODEN VORGESPANNTEN ANTRIEBSRAD**

(30) Priorität: 31.05.2021 DE 102021114066
(71) Anmelder: Jungheinrich Aktiengesellschaft, 22047 Hamburg (DE)
(72) Erfinder: Schwarz, Richard, 22761 Hamburg (DE); Schefner, Melanie, 22305 Hamburg (DE); Krenzin, Marcel, 24576 Bad Bramstedt (DE); Schüler, Michael, 24558 Wakendorf II (DE)
(74) Vertreter: Hauck Patentanwaltspartnerschaft mbB

(57) **Zusammenfassung**

Flurförderzeug, das einen Fahrzeugrahmen aufweist, an dem eine Antriebseinheit mit einem Antriebsrad beweglich gelagert und über eine Federeinheit gegenüber dem Boden vorgespannt ist, wobei die Federeinheit einen Hydraulikzylinder aufweist, der zwischen Antriebseinheit und Fahrzeugrahmen angeordnet ist und ein schaltbares Ventil aufweist, das in seinem Sperrzustand eine einseitige Bewegung des Hydraulikzylinders sperrt.

## Beschreibung

Die vorliegende Erfindung betrifft ein Flurförderzeug, das einen Fahrzeugrahmen aufweist, an dem eine Antriebseinheit mit einem Antriebsrad vertikal beweglich gelagert ist. Das Antriebsrad ist über eine Federeinheit gegenüber dem Boden vorgespannt.

Aus US 4,750,579 ist eine Lagerung für ein vorgespanntes Antriebsrad bekannt geworden, bei der ein Fahrwerkzylinder mit einem mechanischen Federelement kombiniert ist. Ein Sperrventil ist zwischen einem Hubzylinder und dem Fahrwerkszylinder des Antriebsrades gespannt. Das Sperrventil ist ausgebildet, um bei einem Heben der Last um mehr als einen Meter den Fahrwerkszylinder zu sperren, während er ansonsten drucklos gehalten ist.

Aus EP 1 555 238 B1 ist ein Flurförderzeug mit Fahrantrieb bekannt geworden, bei dem das angetriebene Rad zusätzlich zu einer Federanordnung mit einem hydraulischen Dämpfer gedämpft ist. Die Kennlinie des Dämpfers ist dabei derart ausgebildet, dass die Arbeitskennlinie steil verläuft, während die Entspannungskennlinie flach verläuft, sodass die Rückstellung des Antriebsrades bei einem minimalen Einfall relativ rasch vor sich gehen kann und dabei ein ständiger Bodenkontakt erhalten bleibt.

Aus EP 2 354 078 A1 ist eine Halterung für ein Antriebsrad bekannt geworden, bei der das Antriebsrad entlang zweier vertikal verlaufender Stangen geführt ist. Über einen Fahrwerkzylinder besteht eine elastische Verbindung entlang einer an den vertikalen Stangen verschieblichen Halterung für das Antriebsrad. Das bedeutet, dass wegen der Elastizität selbst bei einem Stoppen der vertikalen Bewegung eine begrenzte Beweglichkeit des Antriebsrades in Richtung des Fahrzeugs und in Richtung des Untergrundes erhalten bleibt.

Aus EP 2 163 456 A2 ist ein Fahrwerk für ein Flurförderzeug bekannt geworden, das ein angetriebenes Rad und Stützrollen auf jeder Seite des Antriebsrades aufweist. Die Stützrollen und/oder das Antriebsrad sind mittels eines Stützzylinders gegen den Untergrund kraftschlüssig beaufschlagt, wobei ein zum Heben der Last vorgesehener Hubzylinder mit dem Stützzylinder über ein Druckgefälleventil miteinander verbunden ist.

Die vorstehenden Konzepte setzen zur Auslegung der Antriebsradlast stillschweigend immer eine ausreichende Antriebsachslast voraus, die von der Fahrzeuggesamtmasse und deren Schwerpunktlage abhängig ist. Die Größe der Antriebsachslast ist für eine Fahrwerksauslegung bezüglich Traktionsvermögen und Seitenstabilität von Bedeutung, da immer eine Aufteilung zwischen dem Antriebsrad und einem oder mehreren seitlich angeordneten Stützrädern erfolgt. Ändert sich bei einem modernen Flurförderzeug z.B. durch Einsatz von Lithium-Ionen-Batterien anstatt der herkömmlichen Bleisäurebatterien das Gewicht des Fahrzeugs (die Gewichtsreduzierung beträgt ca. 200kg), so muss für das Traktionsvermögen und die erforderliche Seitenstabilität des Fahrzeugs auch die Kraftbeaufschlagung für das Antriebsrad entsprechend angepasst werden.

Der Erfindung liegt die Aufgabe zugrunde, ein Flurförderzeug mit einem gegenüber dem Boden vorgespannten Antriebsrad bereitzustellen, das unter fahrzeugbezogenen Einsatzbedingungen die erforderliche Antriebsradlast bezüglich Traktion, sowie eine ausreichende Seitenstandsicherheit sicherstellt.

Erfindungsgemäß wird die Aufgabe durch ein Flurförderzeug mit den Merkmalen des Anspruchs 1 gelöst. Vorteilhafte Ausgestaltungen bilden die Gegenstände der Unteransprüche.

Das erfindungsgemäße Flurförderzeug besitzt einen Fahrzeugrahmen, an dem eine Antriebseinheit mit einem Antriebsrad beweglich gelagert ist. Die Antriebseinheit ist über eine Federeinheit gegenüber dem Boden vorgespannt. Erfindungsgemäß weist die Federeinheit einen Hydraulikzylinder und ein schaltbares Ventil auf. Das schaltbare Ventil sperrt in seiner geschlossenen Stellung die Bewegung des Antriebsrades in Richtung des Flurbodens. Die Aktivierung der Sperrung ist unabhängig von der aktuellen vertikalen Position des Antriebsrades, die sich während der Fahrt kontinuierlich einem sich ständig ändernden Höhenprofil des Flurbodens anpasst.

In einer bevorzugten Ausgestaltung ist der Zylinder als doppeltwirkender Zylinder ausgeführt. Für doppeltwirkende Zylinder gibt es zwei Ausführungsformen, in der einen tritt die Kolbenstange beidseitig aus dem Zylindergehäuse aus, in der zweiten nur auf einer Seite. Unabhängig von der gewählten Ausführungsform sind die Kolbenräume hydraulisch miteinander verbunden.

In einer bevorzugten Ausgestaltung sind die beiden Kolbenräume des doppeltwirkenden Zylinders über ein schaltbares Ventil voneinander trennbar. Durch das Schalten des Ventils in den Sperrzustand wird einer der beiden Kolbenräume hydraulisch derart gesperrt, dass die Bewegung des Antriebsrades in Richtung des Flurbodens blockiert ist.

Bevorzugt ist auch bei dem doppeltwirkenden Zylinder eine Drosseleinheit vorgesehen, über die ein Fluidstrom in oder aus einem der Kolbenräume gedrosselt wird, um die entsprechende Bewegung des Hydraulikzylinderkolbens zu verlangsamen. Die Drosseleinheit wirkt, wenn keiner der Kolbenräume des Hydraulikzylinders gesperrt ist. In diesem Fall findet ein Austausch des Hydraulikfluids zwischen den Räumen über die Drosseleinheit statt, womit die Bewegung des Antriebsrades zeitabhängig gesteuert werden kann. In der Zylinderausführung mit beidseitigem Kolbenaustritt ist die wirksame Kolbenfläche beider Kolbenräume gleich und somit das verdrängte bzw. angesogene Ölvolumen identisch. Diese Zylinderausführung kann somit abgeschlossen und autark, ohne Anschluss an weiteren Hydraulikkomponenten arbeiten. Bei der Zylinderausführung mit einseitigem Kolbenaustritt sind die wirksamen Kolbenflächen der Kolbenräume jedoch unterschiedlich, die Fläche auf der Seite wo der Kolben aus dem Zylinder tritt ist um die Kreisfläche der Kolbenstange geringer. Daher passen die o.g. Ölvolumen der Kolbenräume nicht mehr zueinander und die entsprechende Öldifferenz muss der Zylindereinheit zu oder abgeführt werden.

Eine vorteilhafte Ausgestaltung der Zylinderausführung mit einseitigem Kolbenaustritt ist daher die hydraulische Verbindung des Kolbenraumes ohne Kolbenstangenaustritt mit dem Hubzylinder der Lasthebevorrichtung. Auf dem sog. Lasthubzylinder ruht die aufgenommene Nutzlast, die hydraulische Verbindung ist frei von Sperrventilen und kann somit die o.g. Ölvolumen bedarfsgerecht, wie aus einem Speicher, bereitstellen oder aufnehmen. Dies hat weiterhin zur Folge, dass sich die Antriebsradlast um eine beladungsproportionale Zusatzkraft erhöht. Im gesperrten Ventilzustand liegt bei dieser Zylinderausführung ein weiterer Vorteil darin, dass ein Kolbenhub entgegen der Sperrrichtung, d.h. ein Abheben des Antriebsrades vom Flurniveau möglich ist. Dies beruht auf der physikalischen Eigenschaft, dass sich die im Fluid befindlichen Kleinstmengen an Luftblasen bei Unterdruck extrem vergrößern, das geschieht so im Kolbenraum mit Kolbenstangenaustritt. Das Öl aus dem anderen Kolbenraum kann nun trotz gesperrten Ventils in den Lasthubzylinder abgeleitet werden. Daher kann das Antriebsrad bei gesperrter Zylindereinheit große Bodenunebenheiten ohne signifikante Stoßbelastungen überfahren.

In einer möglichen Ausgestaltung ist in einem ersten Betriebszustand des Fahrzeugs mindestens einer der beiden Kolbenräume mit einem lastabhängigen Systemdruck beaufschlagt. Ferner kann auch ein zweiter Betriebszustand vorgesehen sein, bei dem der Sperrzustand des Ventils geöffnet ist.

Das bevorzugt parallel zum Hydraulikzylinder geschaltete Federelement ist mechanisch vorgespannt und erzeugt die zum Betreiben des Fahrzeugs notwendige Antriebsradlast, die nicht hydraulisch von der Zylindereinheit bereitgestellt wird.

Die der Erfindung zugrundeliegende Aufgabe wird ebenfalls durch ein Flurförderzeug mit einer Fahrzeugsteuerung gelöst, die ein schaltbares Ventil an einer Federeinheit für ein Antriebsrad betätigen kann. Das Ventil wird geöffnet, wenn ein sicherer Betriebszustand erkannt wurde, wobei der sichere Betriebszustand erkannt werden kann, wenn ein Lenkwinkel des Fahrzeugs einen vorbestimmten Wert für eine Geradeausfahrt und/oder eine Hubhöhe eines Lasttragmittels des Flurförderzeugs einen vorbestimmten Wert für eine Transporthöhe nicht überschreitet. Das Öffnen des Ventils in einem sicheren Betriebszustand dient bevorzugt dazu, dass sich die Antriebseinheit in ihrem Hub an die jeweiligen Bodenverhältnisse neu anpassen kann. Bei gesperrtem Zylinder kann die Antriebseinheit Bodensenken unter Flur nicht folgen. Dieser Ansatz ist diametral entgegengesetzt zu dem Ansatz aus dem Stand der Technik, beispielsweise US 4,750,579, wo das Hydraulikventil geöffnet wird, wenn ein gefährlicher Betriebszustand vorliegt, in dem eine Last über eine gewisse Höhe hinausgehoben wurde.

Bevorzugt öffnet die Fahrzeugsteuerung das Ventil, wenn der sichere Betriebszustand für eine vorbestimmte Mindestzeitdauer und/oder eine vorbestimmte Mindestwegstrecke und/oder eine vorbestimmte Anzahl von Antriebsradumdrehungen erkannt wurde. Das Ventil kann auch geöffnet werden, wenn eine vorbestimmte Geschwindigkeit unterschritten wird.

In einer bevorzugten Weiterbildung ist für das Traktionsvermögen des Flurförderzeugs mindestens eine vertikal gefederte Stützrolle vorgesehen, deren Federweg auf üblich befahrbare Muldentiefen und überfahrbare Schwellenhöhen des Fahrzeugs abgestimmt ist. Die befahrbare Muldentiefe und die überfahrbare Schwellenhöhe müssen hierbei nicht gleich groß sein, welche beispielsweise im Bereich von einigen Zentimetern liegen können.

In einer bevorzugten Weiterbildung sind zwei bevorzugt ungefederte Stützrollen vorgesehen, die an einer Koppelschwinge angeordnet sind. Über die Koppelschwinge ist die Bewegung der Stützrollen aneinandergekoppelt. Die Koppelschwinge wird wiederum durch Federelemente, die sich fahrzeugseitig am Rahmen abstützen, in Richtung des Flurbodens gedrückt. Daher sind die für sich ungefederten Stützräder in Kombination mit der Koppelschwinge dennoch vertikal gefedert mit dem Fahrzeugrahmen verbunden. Durch die Koppelschwinge tauschen sich die Stützkräfte zwischen den Stützrollen aus.

Die erfindungsgemäße Ausgestaltung wird nachfolgend anhand von Ausführungsbeispielen näher beschrieben. Es zeigen:
- Fig. 1: eine Antriebseinheit mit einem Antriebsrad, das über eine Federeinheit gegenüber dem Boden vorgespannt ist bei einem nicht bestromten Ventil,
- Fig. 2: die Anordnung aus Fig. 1 bei einem bestromten Ventil,
- Fig. 3: die Anordnung aus Figur 1 bei der Überfahrt einer Schwelle mit bestromtem Ventil
- Fig. 4: die Anordnung aus Figur 1 bei einem bestromten Ventil in einer Fahrbahnmulde,
- Fig. 5: die Anordnung aus Figur 1 bei der Überfahrt einer Schwelle mit unbestromtem Ventil
- Fig. 6: die Anordnung aus Figur 1 beim Durchfahren einer Mulde mit unbestromtem Ventil,
- Fig. 7: die Anordnung aus Figur 1 bei einer Kurvenfahrt mit unbestromtem Ventil,
- Fig. 8: Diagramm für die Anordnung aus Figur 7 der transienten Radlasten bei einer Kurvenfahrt mit unbestromtem Ventil,
- Fig. 9: Ortskurve des Antriebsrades für die Anordnung aus Figur 7 bei einer Kurvenfahrt mit unbestromtem Ventil,
- Fig. 10: Diagramm für die Anordnung aus Figur 7 der transienten Radlasten bei einer Kurvenfahrt mit unbestromtem Ventil jedoch mit starren Seitenstützrollen,
- Fig. 11: Ortskurve des Antriebsrades für die Anordnung aus Figur 7 bei einer Kurvenfahrt mit unbestromtem Ventil jedoch mit starren Seitenstützrollen,
- Fig.12: Diagramm für die Anordnung aus Figur 7 der transienten Radlasten bei einer Kurvenfahrt jedoch mit bestromtem Ventil und mit starren Seitenstützrollen,
- Fig.13: Ortskurve des Antriebsrades für die Anordnung aus Figur 7 bei einer Kurvenfahrt jedoch mit bestromtem Ventil und mit starren Seitenstützrollen.

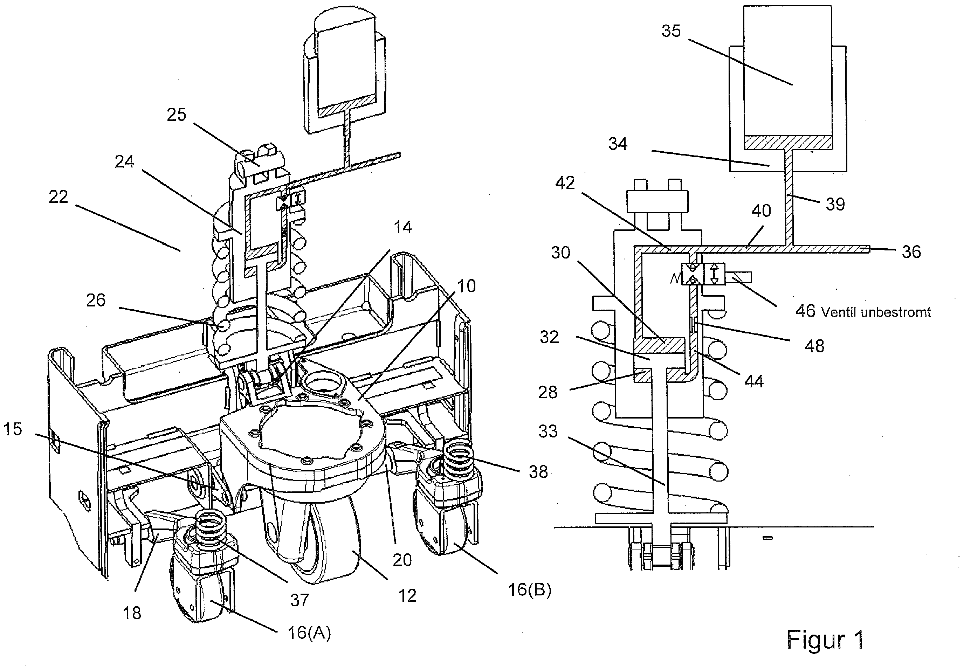

Figur 1 zeigt eine Antriebseinheit 10 mit einem gelenkten und angetriebenen Rad 12. Ein vertikaler Hub wird durch zwei Lenkereinheiten 14 und 15 ermöglicht, die die Antriebseinheit 10 mit dem Fahrzeugrahmen verbinden. Der in der Regel sich über dem Antriebsrad 12 befindende Antriebsmotor ist zur besseren Übersicht nicht dargestellt. Seitlich von dem Antriebsrad 12 befinden sich Stützrollen 16A und 16B, die auf einer Koppelschwinge 18 frei schwenkbar gelagert sind. Die Koppelschwinge 18 ist wiederum um eine horizontale Achse 20 verschwenkbar im Fahrzeugrahmen gelagert. Auf den Koppelschwingenhaltern sind Federelemente (z.B. Spiralfedern) 37, 38 angeordnet, die gegenüber dem Fahrzeugrahmen vorgespannt sind (rahmenseitige Lagerung nicht dargestellt) und somit die Stützräder 16 auf den Flurboden drücken. Die Antriebseinheit 10 besitzt eine Federeinheit 22, die einen doppeltwirkenden Hydraulikzylinder 24 aufweist. Parallel zum Fahrwerkzylinder 24 ist ein als Spiralfeder ausgebildetes Federelement 26 angeordnet, das wie hier dargestellt indirekt über die Zylinderkolbenstange 33 den Antriebsträger 10 beaufschlagt, aber generell auch direkt auf ihn wirken kann. Der doppeltwirkende Hydraulikzylinder 24 besitzt einen Kolbenraum 28 und einen Kolbenraum 30. Die Kolbenräume 28 und 30 sind voneinander durch einen Kolben 32 getrennt. Der Hydraulikzylinder 24 wirkt zwischen dem Fahrzeugrahmen (oberer Anlenkungspunkt für die Achse 25 im Rahmen nicht dargestellt) und der Antriebseinheit 10 und hat daher Einfluss auf die Radlast des Antriebsrades 12. Wird die Kolbenstange 33 ausgefahren, so erhöht sich die Antriebsradlast und damit der Anpressdruck des Antriebsrades 12 auf den Flur unter der Voraussetzung, dass eine Radlastumverteilung zwischen den Stützrollen 16 und dem Antriebrad 12 erfolgen kann (die Summe der Radlasten von Antriebsrad 12 und Stützräder 16 entspricht der Antriebsachslast, die sich aus der Fahrzeuggesamtmasse und der Lage des Fahrzeuggesamtschwerpunktes zum Achsabstand ergibt. Die Antriebsachslast ist somit für eine gegebene Fahrzeugbeladung eine konstante Größe).

Die hydraulische Verschaltung ist ebenfalls schematisch in Figur 1 dargestellt. Ausgehend von einer Pumpe 36 wird der Lasthubzylinder 34 mit Hydraulikfluid versorgt (die Pumpe und die Ventilgruppe zum Heben und Senken des Lasthubzylinders sind nicht dargestellt). Von der Anschlussleitung 39 des Lasthubzylinders 34 führt eine Leitung 40 zum doppeltwirkenden Zylinder 24. Die Leitung 40 teilt sich in eine erste Zuleitung 42 zum Kolbenraum 30 und in eine zweite Zuleitung 44 zum Kolbenraum 28. In der zweiten Zuleitung 44 sind ein schaltbares Ventil 46 sowie eine Drosseleinrichtung 48 vorgesehen. Die Zuleitungen 42, 44 zu den Kolbenräumen 28, 30 sind jeweils die einzigen Zuleitungen zu den Kolbenräumen des doppeltwirkenden Hydraulikzylinders 24.

Der Kolbenraum 30 des Zylinders 24 ist somit untrennbar mit dem Lasthubzylinder 34 der Lasthebevorrichtung hydraulisch verbunden. Der Lasthubzylinder 34 ist mit seinem Gehäuse fest am Fahrzeugrahmen angebracht und hebt über seine Kolbenstange 35 das Lastteil (nicht dargestellt) des Fahrzeugs an. Über eine (an sich bekannte) Hebelkonstruktion wird der Initialhub in ein nahezu flurparalleles Anheben der Gabelzinken des Lastteils überführt, die Nutzlast wird so vom Flur zum Transport freigehoben. Durch die Aufnahme der Last stellt sich ein beladungsabhängiger Druck im Lasthubzylinder 34 ein. Die oben ausgeführte hydraulische Anbindung hat zur Folge, dass dieser Druck nun auch im Kolbenraum 30 proportional zur Nutzlastmasse wirksam ist.

Figur 1 zeigt eine Position, in der das Ventil 46 in seinen Sperrzustand geschaltet ist. Dies erfolgt in dem dargestellten Ausführungsbeispiel durch ein nicht bestromtes Ventil 46. In diesem Sperrzustand ist der Kolbenraum 28 gesperrt. Dies führt dazu, dass ein weiteres Ausfahren der Kolbenstange 33 nicht möglich ist, da das Hydraulikfluid nicht kompressibel ist. Der Kolbenraum 30 ist in dem dargestellten Ausführungsbeispiel aus Figur 1 untrennbar mit dem Lasthubzylinder 34 verbunden, sodass sich die Kolbenstange 33 in den Hydraulikzylinder 24 hineinbewegen kann. Die damit verbundene Vergrößerung des Kolbenraums 28 ist möglich, da dieser auch ohne Aufnahme von Hydraulikfluid sein Volumen vergrößern kann (dieser Sachverhalt wurde oben schon erläutert). Gelegentlich wird dies auch als "Vakuumziehen" bezeichnet.

Zusammenfassend zeigt Figur 1 einen Zustand in dem der Hydraulikzylinder 24 für eine einseitige Bewegung des Antriebsrades 12 hydraulisch gesperrt ist. Eine Bewegung der Kolbenstange 33 aus dem Hydraulikzylinder heraus ist aufgrund der Sperrstellung des Ventils 46 nicht möglich.

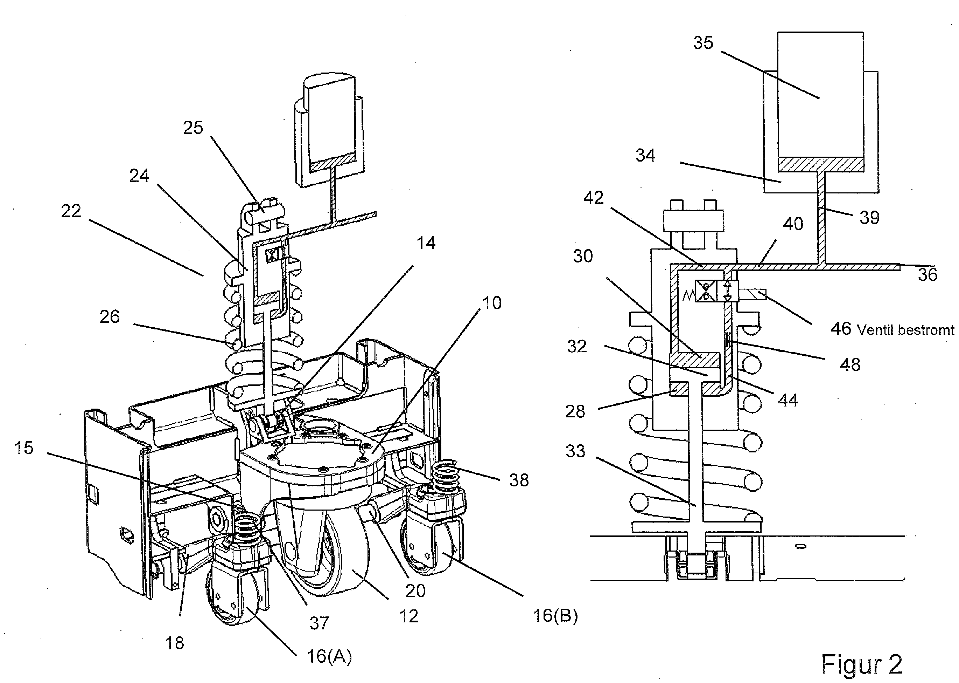

Figur 2 zeigt mechanisch und hydraulisch den gleichen Aufbau wie in Figur 1. Der Unterschied gegenüber Figur 1 besteht darin, dass das Ventil 46 bestromt ist. Hierdurch ist auch der Kolbenraum 28 über die Zuleitung 44 und die Drossel 48 mit dem Kolbenraum 30 verbunden. Dies bedeutet, dass an den beiden Kolbenräumen 28 und 30 nun der Systemdruck aus dem Lasthubzylinder 34 anliegt. So ergibt sich die von dem doppeltwirkenden Hydraulikzylinder 24 auf die Antriebseinheit 10 aufgebrachte Kraft aus dem an der Zuleitung 40 anliegenden Systemdruck des Lasthubzylinders 34. Die Kolbenräume 28 und 30 besitzen eine unterschiedliche Querschnittsfläche, sodass auch bei gleichem anliegendem Druck in den Kolbenräumen eine resultierende Kolbenausschiebekraft entsteht. Diese ergibt sich aus der Flächendifferenz des Kolbens 32 zu den Kolbenräumen 30 und 28. In dem dargestellten Ausführungsbeispiel wirkt eine größere Kraft auf die Kolbenstange 33 in Ausfahrrichtung aus dem Hydraulikzylinder 24 heraus, da die wirksame Querschnittsfläche in Kolbenraum 30 größer als die wirksame Querschnittsfläche in Kammer 28 ist. Vertikale Bewegungen des Antriebseinheit 10 führen zu einem Hub der Kolbenstange 33, wobei sich der Kolbenraum 28 vergrößert oder verkleinert. Bei geöffneten Ventil 46 durchströmt das dabei verdrängte Ölvolumen die Drossel 48, die je nach Ausführungsform die Hubgeschwindigkeit der Kolbenstange 33 und somit die vertikale Bewegung der gesamten Antriebseinheit 10 steuert. Die Drossel kann so ausgeführt sein, dass der Fluidstrom in beide Richtungen gleich gedrosselt wird. Durch Einsatz von Rückschlagblenden sind je nach Durchströmungsrichtung auch unterschiedliche Fluidgeschwindigkeiten möglich. Die Ausfahrgeschwindigkeit der Kolbenstange 33 ist somit in beide Richtungen individuell einstellbar.

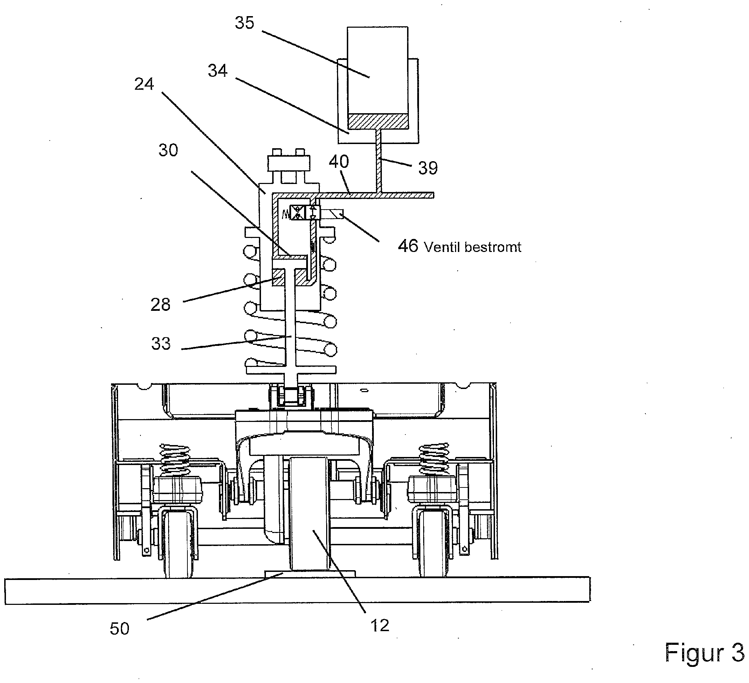

Figur 3 zeigt nun ein Beispiel, bei dem in der Konfiguration aus Figur 2 das Fahrzeug mit dem Antriebsrad 12 über eine Schwelle 50 fährt. Das Antriebsrad 12 wird dabei angehoben und die Kolbenstange 33 fährt in den Hydraulikzylinder 24 ein. Dies bewirkt eine Vergrößerung des Kolbenraums 28 unter Verkleinerung des Kolbenraumes 30. Hierzu strömt das Hydraulikfluid über die Zuleitung 44, das bestromte Ventil 46 und die Drosseleinheit 48 in den Kolbenraum 28 ein. Da aus dem Kolbenraum 30 mehr Fluid verdrängt wird, als der Kolbenraum 28 aufnehmen kann, wird das überschüssige Fluid über die Leitungen 40 und 39 dem Lasthubzylinder 34 zugeführt, dessen Kolben 35 um den entsprechenden Hub ausfährt.

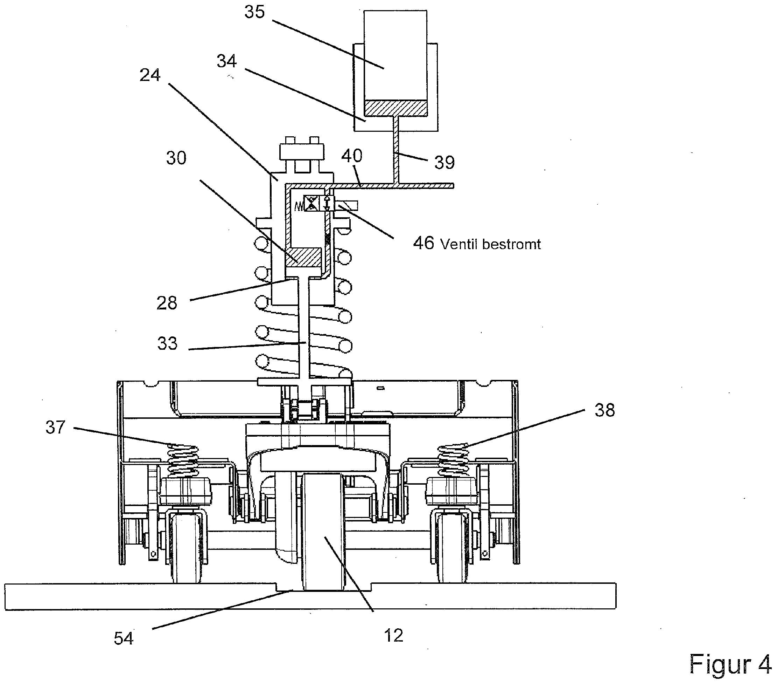

Figur 4 zeigt eine der Figur 3 entsprechende Situation, bei der das Antriebsrad 12 eine Mulde 54 durchfährt. Die Kolbenstange 33 fährt nun der Muldentiefe entsprechend aus dem Hydraulikzylinder 24 heraus, der Hub des Kolbenraumes 28 muss somit auf die real üblichen Bodenverhältnisse abgestimmt sein. Auch hier ist die Bewegung des Antriebsrades 12 durch die Eigenschaften der Drossel 48 gekennzeichnet. Die Geschwindigkeit mit der das Hydraulikfluid aus dem Kolbenraum 28 entweichen kann, wird von der Drossel 48 bestimmt. Die Antriebsradlast resultierend aus dem Hydraulikzylinder 24 ändert sich bei dem Überfahren einer Schwelle 50 oder dem Durchfahren einer Mulde 54 nicht, solange bei bestromtem Ventil 46 in beiden Kammern 28, 30 der Systemdruck des Lasthubzylinders 34 wirkt.

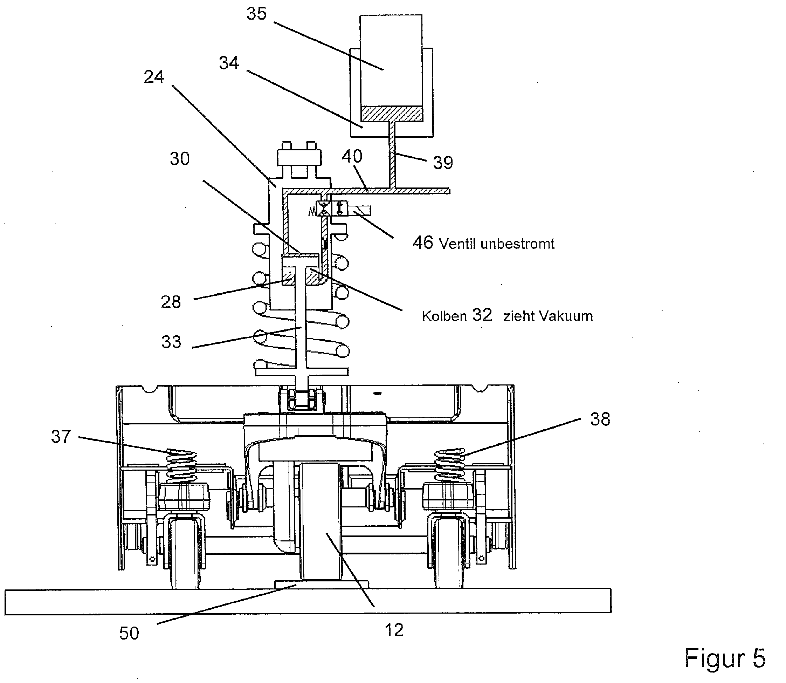

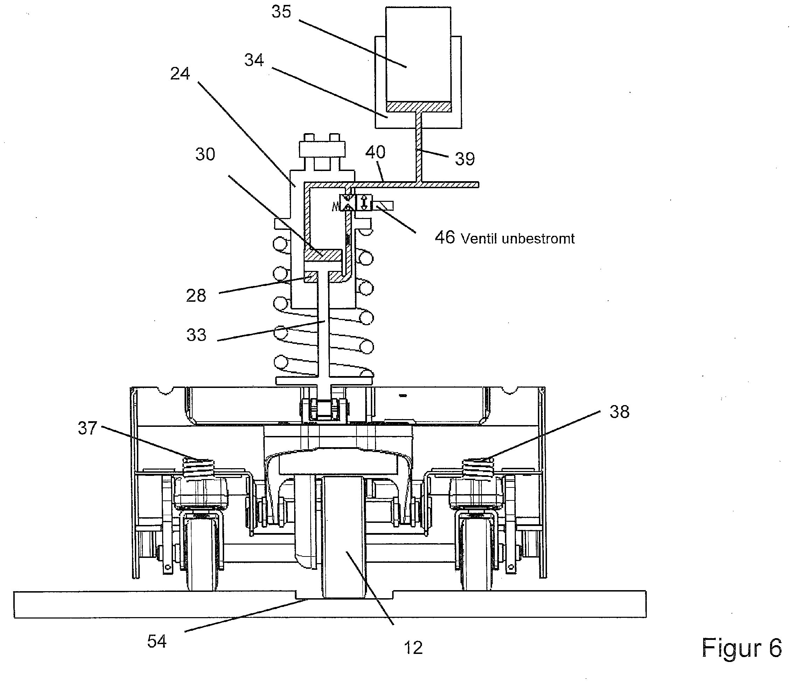

Figuren 5 und 6 entsprechen den Figuren 3 und 4 mit dem Unterschied, dass das Ventil 46 nicht bestromt ist.

In Figur 5 wird eine Schwelle 50 überfahren, wie bereits in Figur 3. Der Unterschied besteht darin, dass das Ventil 46 hier unbestromt ist und damit die Kammer 28 gesperrt ist. Das Ventil 46 ist bei dem Beispiel aus Figur 5 unbestromt, beispielsweise weil eine Palette in eine Regalebene eingelagert werden soll, die höher als 500mm über dem Flurniveau liegt, ab dieser Hubhöhe spricht man von Hochhub. Der Hochhub ist ein Betriebszustand, der hohe Anforderungen an die Kippstabilität des Gabelstapler Fahrwerks stellt, da sich mit steigender Hubhöhe der Nutzlast der vertikale Abstand des Fahrzeuggesamtschwerpunktes zum Flur vergrößert. Gemäß einer vereinfachten Modellvorstellung in der Maschinendynamik befindet sich die Fahrzeuggesamtmasse, auf die die Beschleunigungen aus den drei Raumachsen wirken, im Fahrzeuggesamtschwerpunkt. So steigt mit steigendem Vertikalabstand des Fahrzeuggesamtschwerpunktes auch das aus den Beschleunigungen resultierende Kippmoment an, das von den Fahrwerkskomponenten in den Flurboden abgeleitet werden muss. In diesem Fall ist das Ventil 46 nicht geöffnet, sodass ein Sperrzustand geschaltet ist, der ein Ausfahren der Kolbenstange 33 bzw. des Antriebsrades 12 verhindert und somit die Seitenstandsicherheit des Fahrzeuges erhöht. Obwohl der Sperrzustand geschaltet ist, kann sich der Hub des Kolbens 32 an das Hindernis 50 anpassen, wobei sich das Volumen des Kolbenraums 28 vergrößert und das Volumen des anderen Kolbenraums 30 entsprechend verkleinert wird. Es erfolgt also eine Ausweichbewegung des Antriebsrades 12 über den Hydraulikzylinder, bei der der Stoß des Hindernisses 50 durch die Bewegung der Kolbenstange 33 aufgenommen und nicht in den Fahrzeugrahmen weitergeleitet wird. Wie bereits oben beschrieben nimmt die Kammer 28 kein zusätzliches Hydraulikfluid auf, sondern vergrößert ihr Volumen indem sie "Vakuum zieht". Das überschüssige Fluid aus dem Kolbenraum 30 wird vom Lasthubzylinder 34 aufgenommen. Da in dieser Fahrsituation auch das Federelement 26 um den Betrag der Schwellenhöhe 50 weiter zusammengedrückt wird, muss dessen Federrate möglichst klein gewählt werden. Damit wird erreicht, dass die Antriebsradlast über den Hub der Antriebseinheit 10 nahezu konstant ist. Anderenfalls droht trotz unbestromtem Ventil 46 ein frühzeitiges Umkippen des Fahrzeuges, da das Federelement 26 bei großer Federrate in die Lage versetzt werden kann das Antriebsrad 12 auf der Schwelle wieder auszufahren. Im ungünstigsten Fall nimmt der Kolbenraum 28 wieder sein ursprüngliches Volumen vom Sperrzustand ein.

Von besonderem Interesse ist nun die dargestellte Anordnung in Figur 6, bei der das Antriebsrad 12 in eine Mulde 54 gerät. Das schaltbare Ventil 46 befindet sich in seinem Sperrzustand, beispielsweise weil ein Hochhub im Rahmen eines Einstapelvorgangs erfolgt. Anders als bei der Situation in Figur 5 kann die Antriebseinheit 10 eine notwendige Bewegung des Antriebsrades 12 in die Mulde 54 nicht ermöglichen. Das Volumen des Kolbenraums 28 kann nicht reduziert werden, sodass die Kolbenstange 33 nicht weiter ausfahren kann. Hier kommt das Einfedervermögen der Stützrollen 16 bzw. der Koppelschwinge 18 zu Tragen. Diese federn ein und stellen so sicher, dass das Antriebsrad 12 sein Traktionsvermögen beibehält und ausreichender Bodenkontakt besteht, um nie die Kontrolle des Fahrzeugs bezüglich der Lenkfähigkeit zu verlieren und das Anfahren und Abbremsen immer mit minimalem Schlupf zu ermöglichen.

Zusammenfassend kann festgehalten werden, dass die betrachteten Fahrsituationen von Hindernis 50 und Mulde 54 von der Antriebseinheit sowohl bei gesperrtem Zustand des Ventils als auch bei nicht gesperrtem Zustand des Ventils mit ausreichender Traktion befahren werden können.

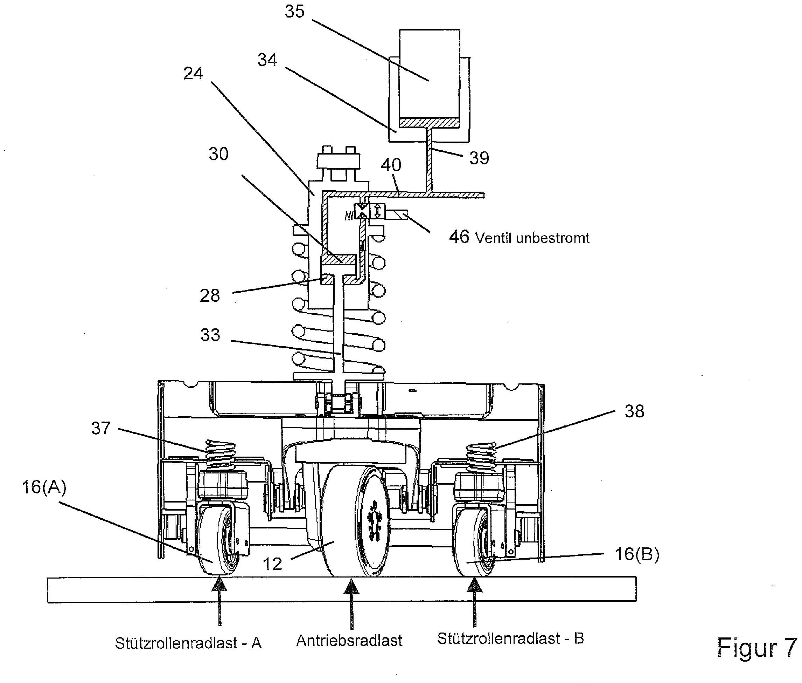

Figur 7 zeigt die Fahrwerkseinstellung für eine Kurvenfahrt nach links. Die Radlastverteilung F_{AR} für das Antriebsrad 12 und F_{StA}, F_{StB} die Stützrollen 16A bzw. 16B ergibt sich bei Kurvenfahrt durch folgende Randbedingungen:
Kurvenradius, Fahrgeschwindigkeit, Fahrzeugmasse und vertikaler Schwerpunktlage des Fahrzeugs, sowie dem Bestromungszustand des Ventils 46 und der gewählten Federkonstanten der Federelemente 37 und 38 der Stützrollenfederung.

Das Ventil 46 ist unbestromt d.h. in den Sperrzustand geschaltet, wenn der Lenkwinkel des Antriebsrades 12 um wenige Grad von einem für Geradeausfahrt vorbestimmten Wert abweicht. Dies bedeutet, dass nur während einem sicheren Betriebszustand, in dem beispielsweise nicht gelenkt wird und / oder der Lastschlittenhub eine gewisse Höhe nicht überschreitet, ein entsperrter Zylinderzustand vorliegt, ansonsten ist das Ventil 46 gesperrt.

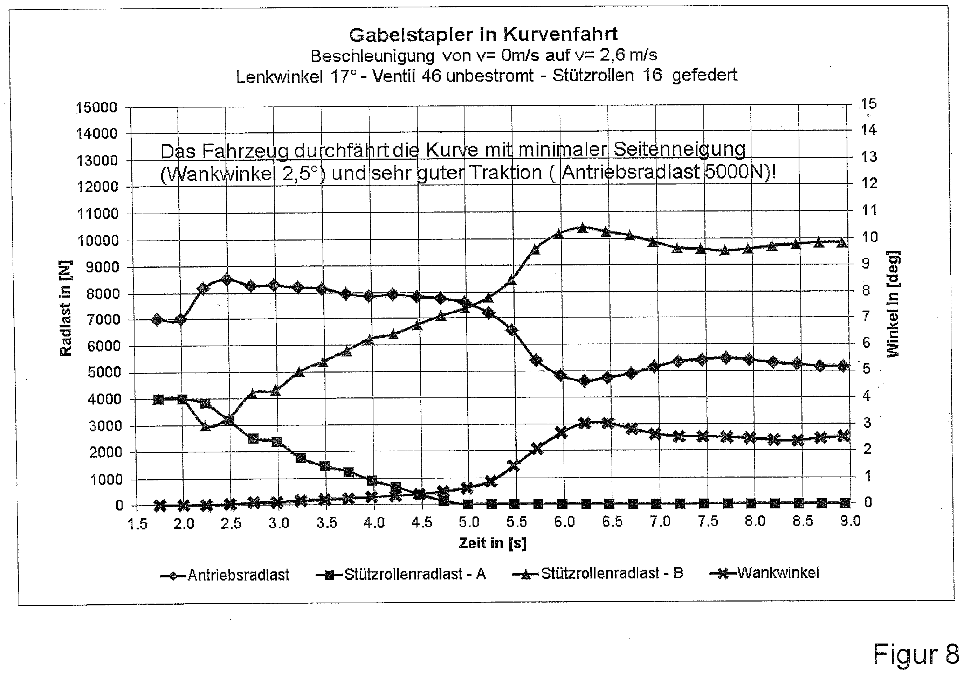

In Figur 8 sind die transienten Zustandsgrößen der einzelnen Radlasten für eine Kurvenfahrt mit Nennlast in einem Diagramm dargestellt. Die Werte stammen aus einem Mehrkörper Simulationsmodell. Das Fahrzeug beschleunigt dabei unter konstanten Lenkwinkel von 17° aus dem Stand auf v= 2.6 m/s. Es zeigt sich, dass die kurveninnere Stützrolle 16A nach ca. 5s den Bodenkontakt verliert und von da ab in der Luft hängt. Die Antriebsachslast teilt sich von diesem Zeitpunkt an nur noch auf das Antriebsrad und die Stützrolle 16B auf, wobei in diesem Beispiel ca. 5000N auf dem Antriebsrad und 10000N auf der Stützrolle lagern. Das Traktionsvermögen des Antriebsrades bezüglich Kurvenfahrt wird durch die Einfederungseigenschaften der Stützrolle 16B ermöglicht. Die Seitenstabilität des Fahrzeugs, gekennzeichnet durch den Wankwinkel 2,5°, ergibt sich bei diesem Fahrmanöver durch die Sperrung der Ausfahrmöglichkeit des Antriebsrades.

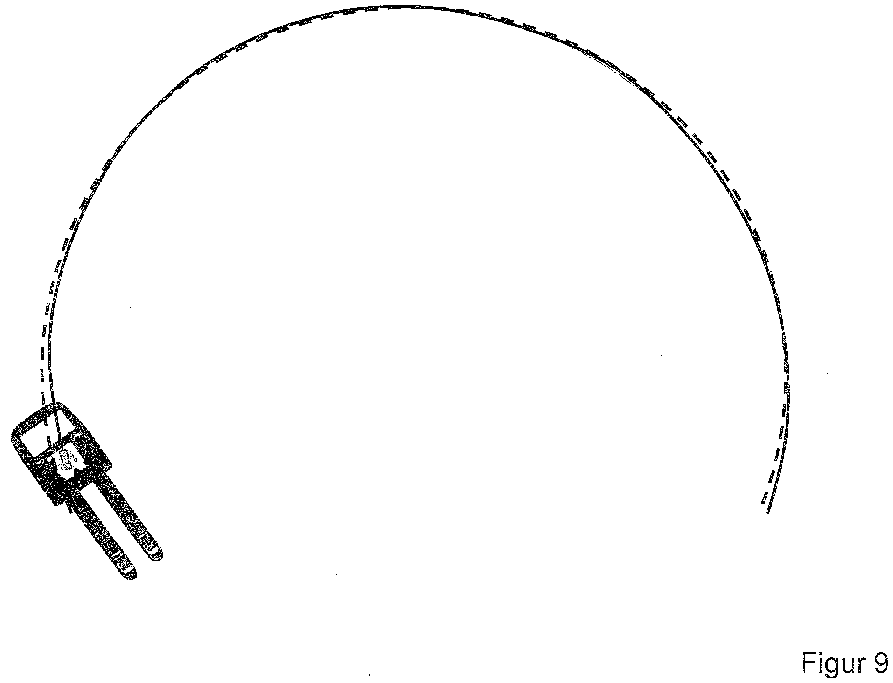

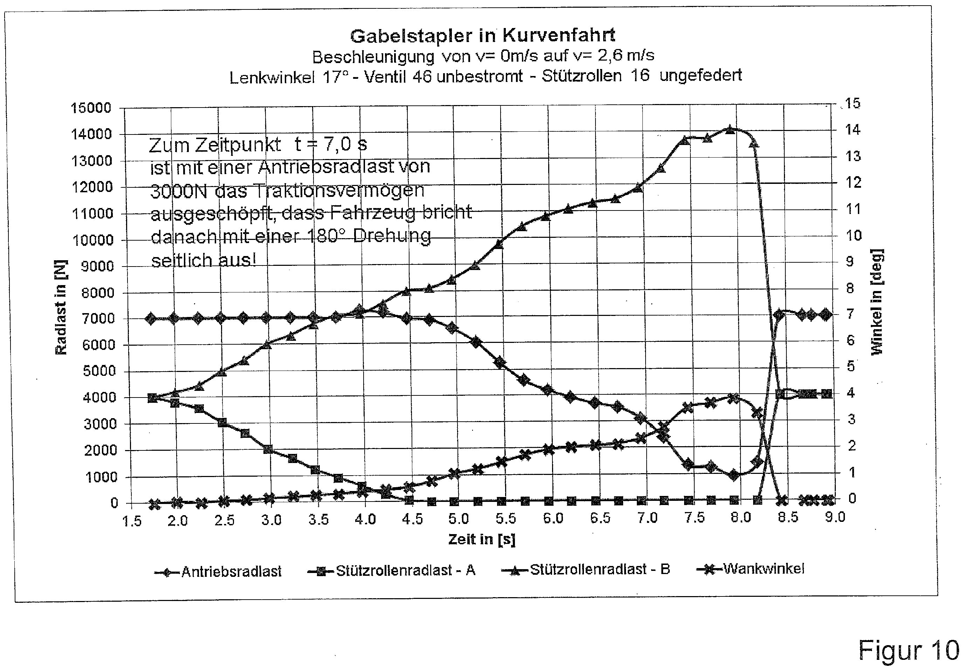

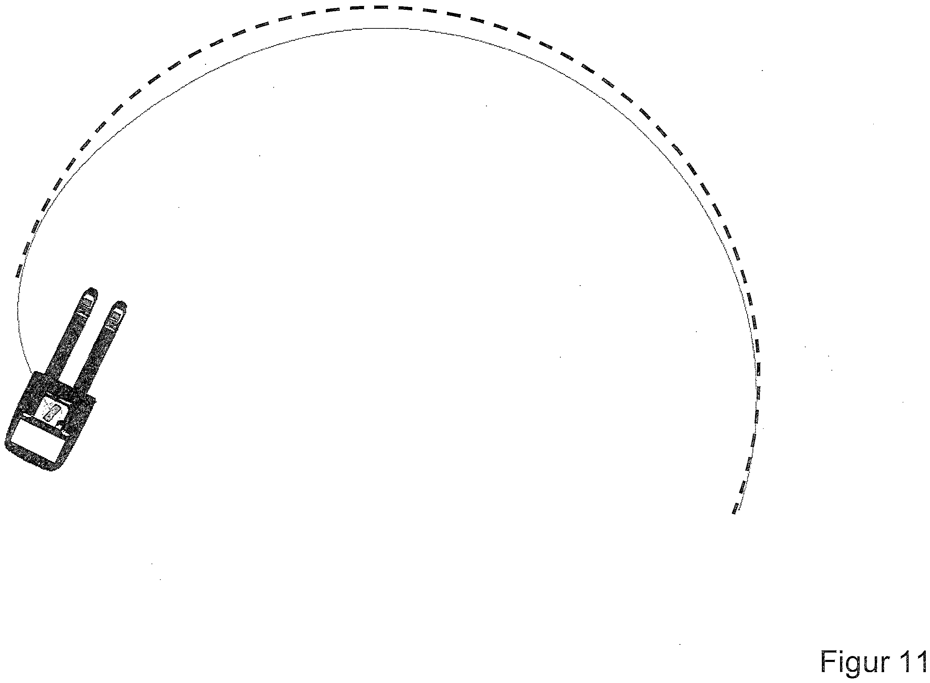

In Figur 9 ist für den Fahrkurs die Ist- Ortskurve von Antriebsradmitte (durchgezogene Line) des Simulationsmodells und der Kreisbogen der theoretischen Erwartung (gestrichelte Linie) abgebildet. Wie man sieht fährt das Fahrzeug den vorgegebenen Kurs nach, jedoch mit geringen Abweichungen. Um diese Kursabweichungen gewichten zu können, wird in dem oben dargestellten Fahrmanöver die Stützrollenfederung auf starr geändert. Die Ergebnisse sind in den Figuren 10 und 11 dargestellt. Es zeigt sich, dass die Antriebsradlast nun von 5000N auf 1000N absinkt und die Stützrollenlast B von 10000N auf ca. 14000N ansteigt. Mit 1000N Antriebsradlast können jedoch die aus der Kurvenfahrt resultierenden Antriebsradquerkräfte nicht mehr auf den Flurboden übertragen werden. Wie man in Figur 11 deutlich erkennen kann bricht das Fahrzeug seitlich aus und vollführt eine 180° Drehung.

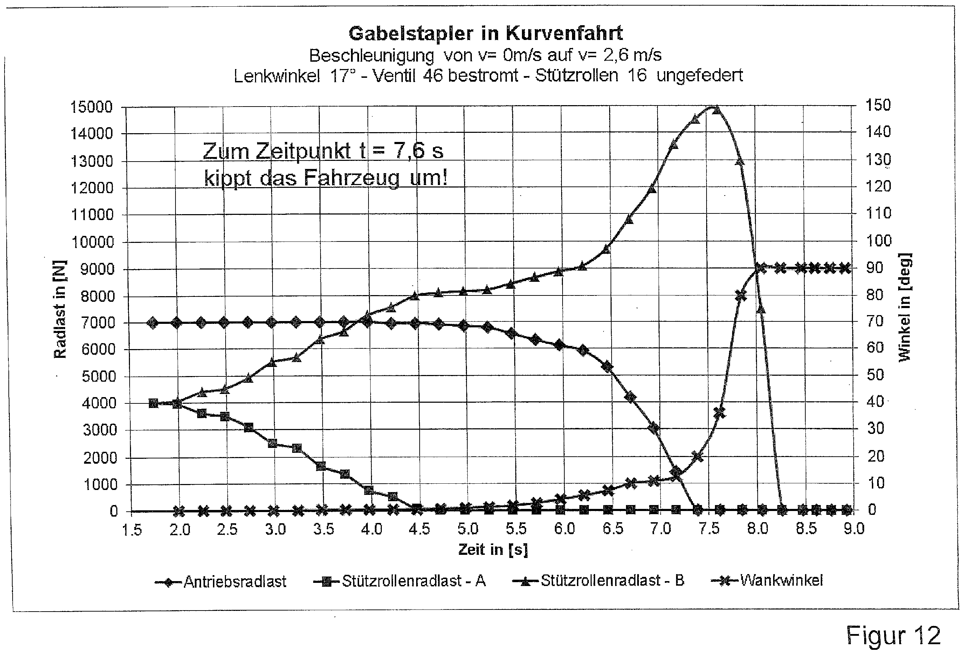

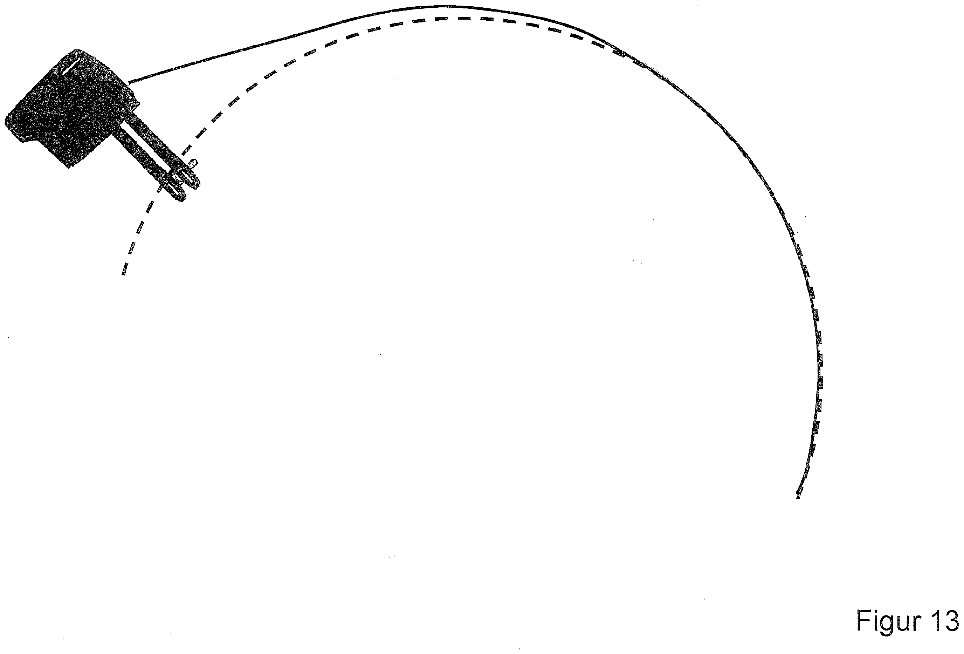

In den Figuren 12 und 13 wird der Einfluss der Zylindersperrung dargestellt. Die Stützrollenfederung ist hier auch starr und das Ventil 46 wird dauerhaft bestromt. Hierbei kommt es zum denkbar schlechtesten Szenario, das Fahrzeug kippt um!

Fazit: Das Fahrzeug mit der Sperrfunktion der Kolbenstange 33 in Kombination mit gefederten Seitenstützrollen ist unter den vorgegebenen Randbedingungen für eine Kurvenfahrt die einzige Ausführung, die die geforderte Fahraufgabe erfüllen kann.

Bei der vorstehend beschriebenen Ausgestaltung der Antriebseinheit liegt ein besonderer Vorteil darin, dass es nicht erforderlich ist, einen instabilen Fahrzustand zu sensieren oder einen Antriebsraddruck für eine Verbesserung der Seitenstabilität entsprechend anzupassen.

Um bezüglich der Seitenstabilität keine Betriebszustände zur Ansteuerung des Ventils 46 sensieren zu müssen, wird die gesperrte Ventilstellung zur Grundeinstellung für den Betrieb des Flurförderzeugs. Um auch bei geschlossenem Ventil das Fahrzeug mit ausreichender Traktion sicher betreiben zu können, wird verhindert, dass sich die Antriebseinheit am verriegelten Hydraulikzylinder aufhängt und das Antriebsrad ohne Bodenkontakt frei in der Luft dreht. Hier werden wie oben erläutert, anstatt starre Stützrollen gefederte Stützrollen eingesetzt, deren Federweg u. a. die befahrbaren Muldentiefen vorgeben. Die Federkonstante der Stützrollen ist dabei so gewählt, dass sich bei Kurvenfahrt möglichst kleine Wankwinkel ergeben und sich das Fahrwerk annähernd wie ein Vierrad verhält.

Das in der Grundeinstellung gesperrte Ventil 46 kann zu dem Zweck geöffnet werden, damit sich bei einem sich änderten Bodenprofil die Vorspannkräfte von Feder und Fahrwerkzylinder fortwährend neu einstellen können. Der hierfür sicherste Fahrzeugbetriebsbereich ist die Geradeausfahrt mit abgesenkten Gabelzinken bis hin zu einer Transporthöhe, ab der das Fahrverhalten instabil wird. Der Lenkwinkel und die Hubhöhe der Nutzlast sind in der Fahrsteuerung bekannt und können daher zur Ansteuerung des Ventils eingesetzt werden. Bei der Optimierung hinsichtlich der Traktion und der Seitenstabilität hat sich herausgestellt, dass für die Ventilansteuerung die Nutzung dieser Betriebszustände (Geradeausfahrt, Transporthöhe) die besten Ergebnisse ergeben. Eine Besonderheit zeigt sich beim Herausbeschleunigen aus einem kleinen Kurvenradius in die Geradeausfahrt. Wird hierbei das Ventil zu früh geöffnet, weil die Fahrsteuerung allein durch den Lenkwinkel um die 0° den Betriebsbereich als fahrdynamisch sicher einstuft, kann das Fahrzeug dennoch in einen instabilen Zustand geraten. Daher muss der sichere Betriebszustand vor der Ventilöffnung zum Resetten des Antriebsraddrucks zuverlässig vorliegen. Dies kann beispielsweise über die Dauer, Fahrstrecke, Antriebsradumdrehungen und/oder die Geschwindigkeit bestimmt werden.

### Bezugszeichen

- 10: Antriebseinheit
- 12: Antriebsrad
- 14: Parallellenker (oben)
- 15: Parallellenker (unten)
- 16: Stützrollen (A in Gabelrichtung gesehen links, B entsprechend rechts)
- 18: Koppelschwinge
- 20: Achse
- 22: Federeinheit
- 24: Doppeltwirkender Hydraulikzylinder
- 25: Verbindungsachse
- 26: Federelement Antriebseinheit 10
- 28: Kolbenraum
- 30: Kolbenraum
- 32: Kolben
- 33: Kolbenstange
- 34: Lasthubzylinder
- 35: Kolbenstange vom Hubzylinder der Lasthebevorrichtung
- 36: Pumpe und Ventilblock zur Hubsteuerung
- 37: Federelement Koppelschwinge 18 (Stützrad)
- 38: Federelement Koppelschwinge 18 (Stützrad)
- 39: Zuleitung Hubzylinder der Lasthebevorrichtung
- 40: Zuleitung doppeltwirkender Zylinder Federeinheit
- 42: Zuleitung Kolbenraum 30
- 44: Zuleitung Kolbenraum 28
- 46: schaltbares Ventil
- 48: Drossel
- 50: Schwelle
- 54: Mulde

## Patentansprüche

1. Flurförderzeug, das einen Fahrzeugrahmen aufweist, an dem eine Antriebseinheit (10) mit einem Antriebsrad (12) beweglich gelagert und über eine Federeinheit (22) gegenüber dem Boden vorgespannt ist, **dadurch gekennzeichnet, dass** die Federeinheit (22) einen Hydraulikzylinder (24) aufweist, der zwischen Antriebseinheit (10) und Fahrzeugrahmen angeordnet ist und ein schaltbares Ventil (46) aufweist, das in seinem Sperrzustand eine einseitige Bewegung des Hydraulikzylinders (24) sperrt.

2. Flurförderzeug nach Anspruch 1, **dadurch gekennzeichnet, dass** der Hydraulikzylinder als doppeltwirkender Hydraulikzylinder (24) mit zwei Kolbenräumen (28, 30) ausgeführt ist.

3. Flurförderzeug nach Anspruch 2, **dadurch gekennzeichnet, dass** die beiden Kolbenräume (28, 30) des Hydraulikzylinders (24) über das schaltbare Ventil (46) miteinander verbunden sind.

4. Flurförderzeug nach einem der Ansprüche 1 bis 3, **dadurch gekennzeichnet, dass** eine Drosseleinheit (48) vorgesehen ist, über die ein Fluidstrom in oder aus einem der Kolbenräume (28, 30) gedrosselt wird, um die entsprechende Bewegung des Hydraulikzylinderkolbens (33) zu dämpfen und/oder zu verzögern.

5. Flurförderzeug nach einem der Ansprüche 1 bis 4, **dadurch gekennzeichnet, dass** in dem Sperrzustand des schaltbaren Ventils (46) eine Verminderung des Volumens in dem gesperrten Kolbenraum (28) verhindert und zugleich ein Vergrößern des Volumens in dem gesperrten Kolbenraum (28) möglich ist.

6. Flurförderzeug nach einem der Ansprüche 1 bis 5, **dadurch gekennzeichnet, dass** in mindestens einem ersten Betriebszustand des Fahrzeugs mindestens einer der beiden Kolbenräume (30, 28) mit einem lastabhängigen Systemdruck (39) beaufschlagt ist.

7. Flurförderzeug nach einem der Ansprüche 1 bis 6, **dadurch gekennzeichnet, dass** in mindestens einem zweiten Betriebszustand des Fahrzeugs der Sperrzustand des Ventils (46) geöffnet ist.

8. Flurförderzeug nach einem der Ansprüche 1 bis 7, **dadurch gekennzeichnet, dass** die beiden Kolbenräume (28, 30) eine Flächendifferenz aufweisen, die eine Kolbenausschiebekraft erzeugt, wobei die Flächendifferenz derart gewählt ist, dass die Kolbenausschiebekraft eine Antriebsradlast erzeugt.

9. Flurförderzeug nach einem der Ansprüche 1 bis 8, **dadurch gekennzeichnet, dass** der Hydraulikzylinder (24) zusätzlich ein mechanisch vorgespanntes Federelement (26) aufweist, dessen Vorspannung zu der Antriebslast beiträgt, wobei das Federelement (26) bevorzugt parallel zum Hydraulikzylinder (24) geschaltet ist.

10. Flurförderzeug mit einer Fahrzeugsteuerung, die ein schaltbares Ventil (46) an einer Federeinheit (22) für ein Antriebsrad (12) betätigen kann, **dadurch gekennzeichnet, dass** das Ventil (46) geöffnet wird, wenn ein sicherer Betriebszustand erkannt wurde, wobei der sichere Betriebszustand erkannt werden kann, wenn ein Lenkwinkel des Fahrzeuges einen vorbestimmten Wert für eine Geradeausfahrt und/oder eine Hubhöhe eines Lasttragmittels des Fahrzeugs einen vorbestimmten Wert für eine Transporthöhe nicht überschreitet.

11. Flurförderzeug nach Anspruch 10, **dadurch gekennzeichnet, dass** die Fahrzeugsteuerung das Ventil (46) dann öffnet, wenn der sichere Betriebszustand für einen vorbestimmten Mindestzeitraum andauerte und/oder eine vorbestimmte Mindestwegstrecke gefahren wurde und/oder eine vorbestimmte Antriebsradumdrehungsanzahl sensiert wurde und/oder wenn eine vorbestimmte Geschwindigkeit unterschritten wird.

12. Flurförderzeug nach Anspruch 1 bis 11, **dadurch gekennzeichnet, dass** ein zweiter Kolbenraum (28) über eine Verbindungsleitung (44) mit dem ersten Kolbenraum (30) verbunden ist, wobei die Verbindungsleitung (44) die Drosseleinheit (48) und das schaltbare Ventil (46) aufweist.

13. Flurförderzeug nach Anspruch 12, **dadurch gekennzeichnet, dass** die Zuleitung (42) zu dem ersten Kolbenraum (30) mit einer Zuleitung (39) zu einem Hubzylinder (34) verbunden ist, wobei der Hubzylinder (34) ein Lasthebemittel anhebt, somit dessen Systemdruck auch am ersten Kolbenraum (30) anliegt.

14. Flurförderzeug nach einem der Ansprüche 1 bis 13, **dadurch gekennzeichnet, dass** mindestens eine Stützrolle (16) vorgesehen ist, die eine vertikale Einfederung besitzt, deren Federweg von einer vom Fahrzeug befahrbaren Muldentiefe und/oder vom erforderlichen Antriebsraddruck bei Kurvenfahrt bestimmt ist.

15. Flurförderzeug nach einem der Ansprüche 1 bis 14, **dadurch gekennzeichnet, dass** mindestens zwei Stützrollen auf einer gemeinsamen Koppelschwinge gelagert sind, die schwenkbar und vertikal gefedert mit dem Fahrzeugrahmen verbunden ist.
